# EUROPEAN PATENT APPLICATION

(11) **EP 1 091 582 A2**
(43) Date of publication of application: **11.04.2001**
(21) Application number: 00308709.5
(22) Date of filing: 04.10.2000
(51) Int. Cl.: H04N 7/173, G09B 7/04

(54) **Enhanced video programming apparatus and method providing a shared whiteboard**

(30) Priority: 04.10.1999 US 411939
(71) Applicant: ACTV, INC., New York, NY 10020 (US)
(72) Inventor: Abato, Michael R., White Plains, New York 10605 (US); Harrington, Jeffrey M., Brooklyn, New York 11215 (US)
(74) Representative: Needle, Jacqueline

(57) **Abstract**

Users view a particular video program and can exchange information through a chat room. Frames of video content from the program are pushed to users in the chat room for viewing on their whiteboards. The users are enabled to modify the frame content and to transmit the modifications to the other users such that a shared whiteboard is provided.

## Description

The present invention relates to a method and apparatus for presenting program frame content to a user machine.

Computers have the capability to provide massive amounts of educational and entertainment information by way of the Internet. Currently, on-line systems offer a variety of different services to users, including news feeds, electronic databases (either searchable by user directly on the on-line system, or downloadable to the user's own computer), private message services, electronic newsletters, real time games for play by several users at the same time, and job placement services, to name a few. However, currently most on-line communications occur merely through text. This is in contrast to the audio/visual presentation of the alternative electronic medium, television. However, it is expected that as multi-media's incessant growth continues, audio/visual programs will proliferate and text will become less and less dominant in the on-line environment.

Even though these programs will be introduced, the Internet will remain essentially user unfriendly due to its very massiveness, organization, and randomness. Simply stated, there is no order or direction in the Internet. Specific pieces of information can be hard to find, and it is even harder to put that piece of information into a meaningful context.

Television, on the other hand, has been criticized for being a passive medium. Whilst interactive television systems have increased the level of user interaction, and thus, provided greater learning and entertainment opportunities, vast information resources such as databases are inaccessible from such a medium.

The present invention seeks to close the gap between video programming and the vast information resources of the Internet.

According to a first aspect of the present invention there is provided a method of presenting program frame content to a user machine, comprising the steps of:
obtaining a frame of information from a displayed program;
transmitting said frame to a user machine for display concurrent with the display of the program; and
permitting a user of the machine to modify the displayed frame.

Methods of the invention may combine broadcast television programming and/or video programming which appears on a VHS or Beta tape, CD-ROM, DVD or other storage medium, and/or particular content from the Internet, and/or video programming at a video server or other video source (hereinafter "video programming) with the Internet.

A method of the invention enables the provision of a shared whiteboard for network collaboration among users. The whiteboard may include a frame of video information transmitted to users within the same network chat room. The users, depending upon their drawing privileges, may make modifications to the frame, and those modifications are transmitted to the other users. In this manner, the users may collaboratively draw upon the frame.

For example, the transmitting step may comprise transmitting the program and the frame for simultaneous display on a display device associated with the user machine, or transmitting the program and the frame for simultaneous display on a television associated with the user machine, or transmitting the program for display on a television associated with the user machine, and transmitting the frame for display on a display device associated with the user machine.

In an embodiment, the transmitting step comprises transmitting the frame to a plurality of associated computers for display to a plurality of users. In this case the modifications to the displayed frame may be transmitted to the plurality of associated computers for altering the displayed frame in accordance with the transmitted modifications.

The plurality of users may be selectively permitted to modify the displayed frame, for example, one user at a time may be enabled to modify the displayed frame. In this case, the users may be placed in a queue and, for example, permitted to modify the displayed frame in the order in which the plurality of users requested to modify the displayed frame.

The present invention also extends to apparatus for presenting program frame content to a user on a machine, comprising:
obtaining means for obtaining a frame of information from a displayed program;
transmitting means for transmitting the frame to a user machine for display concurrent with the display of the program; and
means for permitting a user of the user machine to modify the displayed frame.

For displaying the program and the frame, the user machine may comprise a display device for use alone and/or in conjunction with a television set.

The user machine may comprise a personal computer and/or other programmable device for use alone and/or in conjunction with a television set. Preferably, user interface means are provided at a user machine for enabling a user to modify the displayed frame.

Embodiments of the present invention will hereinafter be described, by way of example, with reference to the accompanying drawings, in which;
Figure 1 is a diagram showing the receipt and decoding of video signals at a subscriber location using a method of the invention;
Figure 2 is a diagram showing an alternative embodiment to achieve the integration of Internet information with video content;
Figure 3 is a flow diagram of the basic software of the invention;
Figure 4 is a diagram showing an embodiment in which URLs are directly transmitted to a user;
Figure 5 shows an embodiment of a system comprising a digital cable box;
Figure 6 shows an embodiment of a system including a digital T.V.;
Figure 7 shows an example of a user interface;
Figure 8 shows an example of a display providing a user interface;
Figure 9 is a diagram showing an embodiment of a system having distributed communication servers;
Figure 10 is a diagram illustrating an embodiment of a shared frame whiteboard;
Figure 11 is a diagram illustrating an alternative embodiment of a whiteboard; and
Figure 12 is a flow diagram illustrating the basic software design of a shared whiteboard as shown in Figure 10.

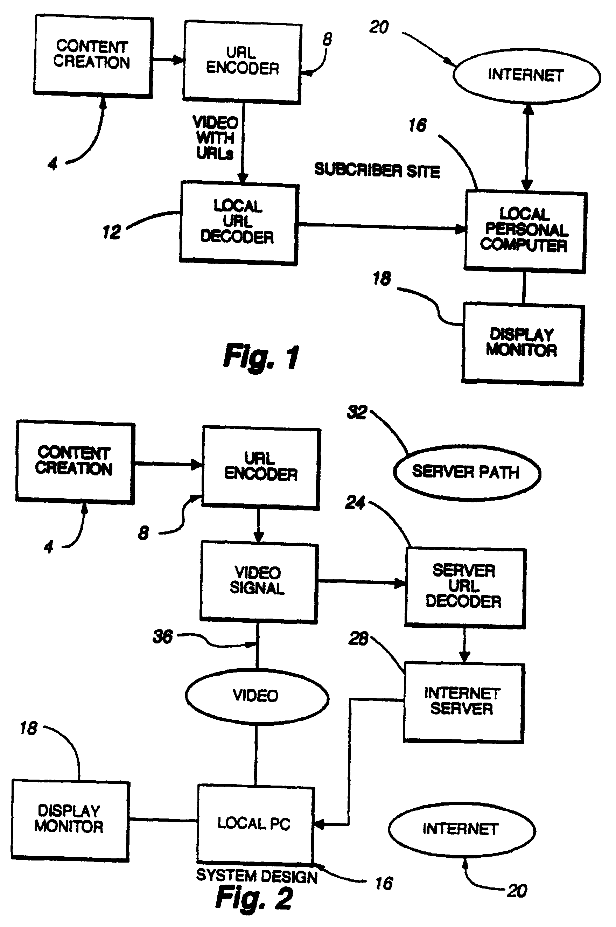

Figure 1 illustrates an embodiment of a computer based system for receiving a video program along with embedded uniform resource locators (URLs) which direct a user's computer 16 to address locations, or web sites, on the Internet 20 to retrieve related web pages. The web pages correspond to the video presentation. The particular video programming can be delivered in analog, digital or digitally compressed formats (e.g. MPEG2) via any transmission means, including satellite, cable, wire, television broadcast or sent via the web.

The video programming is preferably created at a centralized location, for example, as content creation 4 indicated in Figure 1, for distribution to subscribers. Program creation may be accomplished by any appropriate means. After a video program is created, uniform resource locators (URLs) are embedded. In one embodiment, the URLs are embedded into the vertical blanking interval of the video programming by a URL encoder 8, as shown in Figure 1. In this embodiment, the URLs are encoded onto eight fields of line 21 of the VBI. Line 21 is the line associated with close captioning, among other things. However, the URLs may additionally and/or alternatively be embedded in other fields of the VBI, in the horizontal portion of the video, as part of the audio channel, in any subcarrier to the video, or if the video is digital, in one of the data fields.

Although Figure 1 shows the video with the URLs broadcast over the same transmission line, the URLs may be sent down independently of the video program on a data channel. In this embodiment, the URLs may be forwarded to the remote sites either prior to initiation or during the program. Preferably, the URLs have associated time stamps which indicate to the subscriber stations when, during the video program, to display the particular web pages addressed by the URLs. Alternatively, the user can select when to call the particular web pages for display with the video program.

The particular information in line 21 is not part of the visual part of the program, and thus, is not perceptible to the human eye, thereby making it ideal to send data information to the users. Whilst the bandwidth capacity of line 21 is limited, as a system as described transmits only the URLs, and not full web pages, there is more than enough capacity. Furthermore, no additional hardware is necessary at the computer 16 to receive the video and retrieve the web pages.

Once the video program is created, it may be transmitted to user sites over any transmission means, including broadcast, cable, satellite, or Internet, and may reside on video servers. Furthermore, the video program, with or without embedded URLs, may be encoded onto storage means such as a video tape, for example of VHS or Beta format, or an optical disc such as CD or DVD, or any other medium.

Preferably, each receiver station comprises any Intel x86 machine (preferably a 486 processor, pentium processor, etc), an Apple Computer, UNIX or any other type of standard computer workstation. The local computer 16 is preferably connected to either a cable and/or broadcast television or to a local VCR or other video source. At each subscriber site, the local personal computer 16 preferably receives the cable transmission by cable connection on the back of the personal computer 16. The video/audio program may be processed for display on the computer screen using a PC card capable of displaying video signals on a computer monitor in an appropriate TV format such as PAL or NTSC. One example of a PC card is a WinTV card. In addition to the cable connection, there is the Internet 20 connection created concurrently with the cable connection.

The Internet 20 connection may be via high-speed line, RF, conventional modem or by way of two-way cable carrying the video programming. The local PC 16 has Internet access via, for example, an ASCII software mechanism. In an embodiment, at each subscriber site, an associated local URL decoder 12 extracts the URLs, preferably embedded in the vertical blanking interval, with the use of a suitable VBI decoder device. The URL decoder 12 may be either a stand-alone unit or a card which is implemented into the personal computer 16.

In the embodiment shown in Figure 2, the uniform resource locators (URLs) are encoded into the video as described above. Again, the URLs are preferably encoded onto eight fields of line 21 of the VBI, but may also be sent independently of the video. In this embodiment, a URL decoder 24 is located at the server site rather than at the subscriber location. When the decoder 24 receives the video program signal, it strips out the URL codes on line 21 of the VBI and delivers these codes independently to an Internet server 28. The URL code is then subsequently delivered over the Internet 20 to the user PC 16. Simultaneously, the video is broadcast over conventional broadcast or cable transmission means 36 to the user's personal computer 16.

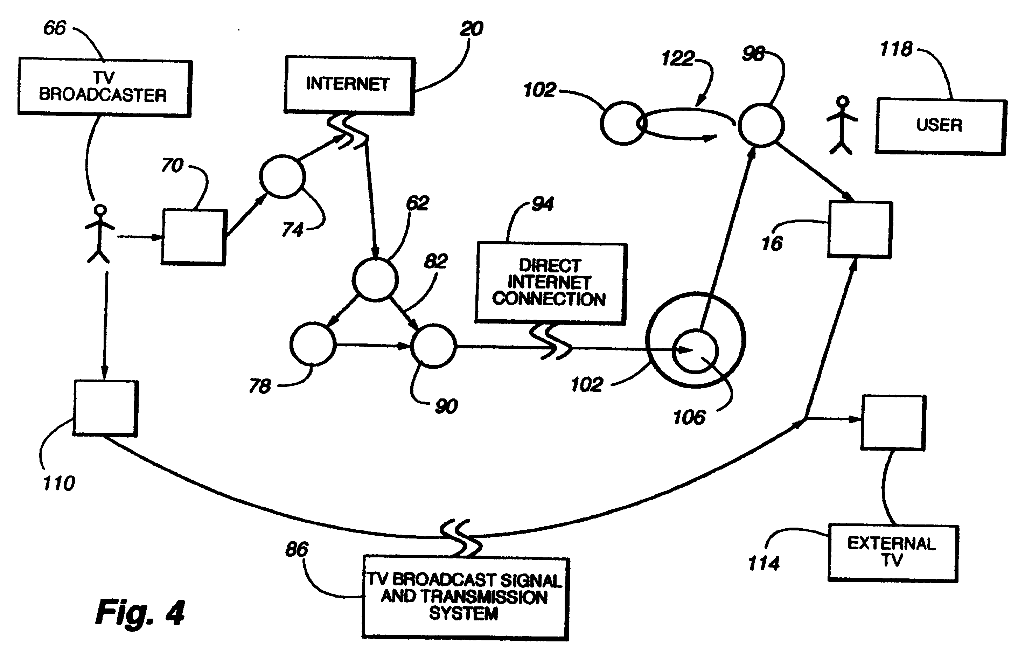

The alternative shown in Figure 4, does not use the VBI. In this embodiment, the system runs an online service over the Internet 20. This service is in the form of an Internet web site 62 which provides a user-interface to a database 78 and to one or more associated data servers 90. The service provides member accounts to TV broadcasters 66 who sign up to use the illustrated system in conjunction with their broadcasts. Each member broadcaster will enter the service at their computer 70 through web browser software 74 using their member account by entering various identification and password information. Once within their account, the member will be provided with a graphical user interface for pre-scheduling URLs for transmission to users 118 over a direct Internet connection 94 at particular times of day. The same user interface, or a variation of it, can be used by broadcasters for live transmission 82 of URLs to users at the same time as a broadcast 86.

One example of this interface might be a scheduling calendar (daily, weekly, monthly, yearly) in which the broadcaster 66 may allocate time periods which coincide with their broadcasts 86, and during which they will send out URLs to their users to link to web pages. For each time period (for example, a particular hour long period during the day) determined by the broadcaster 66 to be a broadcast period (a period during which they want to transmit URLs that correspond to a television show being broadcast from their TV broadcast facility 110 to the external TV 114 of the user 118 at that time), the broadcaster 66 may then enter a series of URLs into an associated file ("Link File") for transmission over the Internet 20 at that time. This Link File may have a user interface such as a spreadsheet, table, or list, or it may be simply a tab-delimited or paragraph-delimited text-file. As an example, each of the records in the Link File consists of a data structure which may contain information such as:
(〈timecode〉,〈URL〉,〈label or title〉, 〈additional information〉,〈additional information〉,...)

The above data structure is just one example. The records in the Link File preferably specify the time, Internet address (i.e. URL), label (such as an associated name), and some optional additional information, for each web page the broadcaster 66 desires to launch during a show.

When a broadcaster 66 modifies their calendar and/or the Link File associated with any given time period(s) in their calendar, this information is saved into the database 78 which is attached to the site 62. Each broadcaster 66 may maintain multiple calendars in the database 78 if they broadcast in different time zones, for example.

The database 78 provides the Link File records for upcoming time periods to a server 90, which may be one server or a distributed network of server programs on multiple computers across the network, to be utilized for scaling to large national or global audiences. The server 90 provides the Link File records, including the URLs, to the user's personal computer 16, which is connected via a network. Examples of possible networks include the public Internet 94, a direct private network, or even a wireless network.

One feature of the embodiment illustrated in Figure 4 is that one or more broadcasters 66 may utilize the same schedule in the database 78 for their own broadcasts 86 or during the same broadcast. For example, a network broadcaster may develop a master schedule and various affiliate broadcasters may subscribe to that schedule or copy it (in the database) and add or delete specific URLs in the schedule for their local audiences or unique programming. This scheme enables affiliates to insert URLs for local advertisers or local subjects into a sequence of more general URLs provided by their network broadcaster 66. In other words, the affiliate can add links that ride on the network feed and then redistribute it to their local audiences.

The system of Figure 4 also enables personalization in the form of unique series of URLs specific to each user's unique profile, which are directly sent over the Internet 20 to each user's specific client software 106. This can be achieved from the broadcaster 66 to each individual user 118, or to particular collections of users. To accomplish personalization, the service may send a different stream of URLs to each user's client software program 106. The stream of URLs sent depends upon a user profile stored in the database 78 or the client software program 106, a user profile which is built on demand or over time for each user 118 based on criteria such as the location of the user, choices the user makes while using a client software program 106, choices the broadcaster 66 makes during a broadcast 86, or automatic choices made by an algorithm (such as a filter) residing on the service 62. Personalization enables each user to receive URLs which are uniquely relevant to their interests, demographics, history, or behaviour in the system.

Once the URLs have reached the personal computer 16, the operation of all of the systems shown in Figures 1, 2 and 4 is similar.

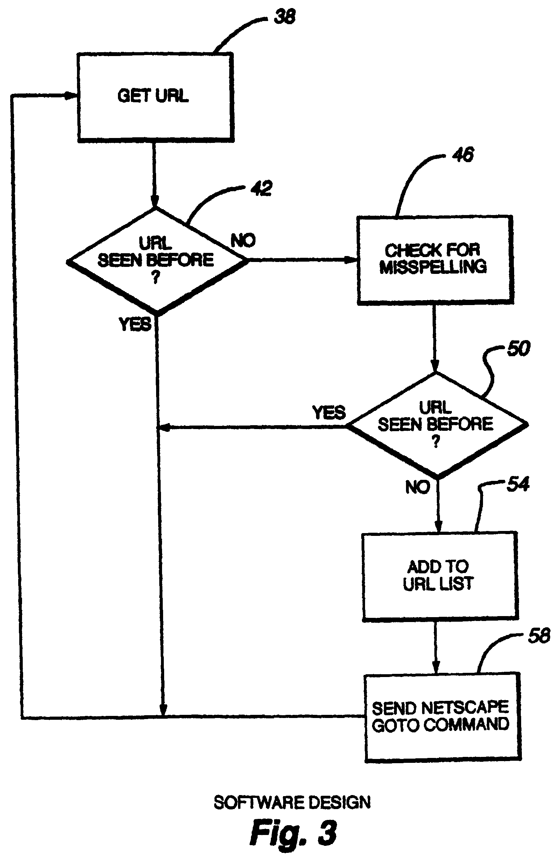

In one embodiment, a JAVA enabled browser 98 as well as specialized software 106 are installed on the computer 16. The JAVA enabled browser 98 allows the computer 16 to retrieve the web pages 102 and is presently the preferred software, as it is platform independent, and thus, enables efficient and flexible transfer of programs, images, etc., over the Internet 20. The specialized interface software 106 (hereinafter, "client software") acts as an interface between the video programming and the Internet functions. The client software 106 retrieves URLs from the video program (embodiment of Figure 1) or directly from the Internet connection (embodiments of Figures 2 and 4), interprets these URLs and directs the JAVA enabled browser 98 to retrieve the particular relevant web pages 102. The client software 106 also synchronizes web pages to the video content for display on the user's computer 16, as shown in Figures 3 and 4 and explained in more detail below.

As explained above, the URLs may be encoded and embedded into the video signal by inserting them into the vertical blanking interval (VBI).

Alternatively, the URLs may be entered by member TV broadcasters 66 along with specified times for transmitting the URLs to the user. At the appropriate times, the URLs are sent directly over the Internet to the users PC 16 via the client software 106 over a direct point-to-point or multicasting connection.

The system may have the capability to detect identical URLs sent directly after one another and to cause the browser not to fetch URLs in these particular cases. As shown in Figure 3, once the URL code is received at the computer, the client software 106 first interprets the URL and determines in step 42 whether the particular URL has been received previously. If it has already been received, the next received URL is interpreted for determination of prior receipt. If the particular URL has not been detected before, the software checks for misspelling in step 46 and any other errors, and if errors exist, corrects these particular errors. Once again, it is determined whether the URL has been previously detected. If it has, the next URL is accessed in step 38. If the URL has not been detected, the specific URL is added to the URL list in step 54. The specific URL is then sent to the web browser, preferably a JAVA enabled browser 98. Upon receipt of the URL, the browser 98, in step 58, will access the web site address 122 (Figure 4) indicated by the URL and retrieve the cited web page(s) 102 via the Internet.

Viewers can view the integrated presentation in the following manner. As mentioned above, the video signal is processed and displayed on a video window on the PC screen using a WinTV card, for example. The corresponding audio is forwarded to the audio card and sent to the PC speakers.

The retrieved web pages 102, referenced by the URL, are optionally time stamped to be displayed on the computer screen when predetermined related video content is displayed in the video window, thus enhancing the video presentation by providing in-depth information related to the video content thereto. Another section on the screen is also preferably used to represent an operational control panel. This control panel provides a list of the URLs which have been broadcast and correspondingly received by the computer 16. This control panel is updated to add a URL code each time a new URL code is received by the PC 16. This list gives the subscriber the flexibility to go back and retrieve particularly informative or interesting web pages that have already been displayed earlier in the program, or alternatively, to print them out for future reference. Furthermore, the list may include URLs referring to web pages not displayed with the broadcast program, but which provide further information on a certain topic of interest to the viewer.

In an example, a viewer may begin watching a musical video featuring a band. As the video is received by the PC 16, URLs are either being received with the video signal or are being received directly via the Internet 20 or another data channel, and are interpreted by the client software 106. Upon direction and command, the JAVA enabled browser 98 retrieves particular web pages 102 from Internet 20 web sites identified in the URLs. These web pages 102 are then displayed on the video screen at particular times. So, for example, whilst the viewer is watching the music video, biographical information on the band may also be displayed adjacent to the video window. Web pages 102 may also include an upcoming concert schedule, and/or audio clips of the band's music may be downloaded from the Internet 20.

As another example, a user may be watching a program relating to financial news. Whilst the narrator is shown discussing high tech stocks, web pages corresponding to detailed financial performance information on high tech stocks, environment and characteristics may be displayed with the video on the computer screen. If the personalization features are included, web pages associated with a particular user's stock may be fetched and displayed on the computer screen with the video program. When the program narrator switches to a discussion on the weekly performance of the Dow Jones, web pages presenting related financial performance information may be simultaneously displayed.

A user may view the interactive program using a television set 114 or other display monitor in conjunction with the display screen of the personal computer 16. In this case, the relevant web pages are shown on the personal computer 16 whilst the video program is displayed on the television monitor 114. In this alternative, a cable set top box receives the television program from the multi-channel cable. The personal computer 16 also receives the video program from the multi-channel cable and extracts the URLs, embedded in the vertical blanking interval of the video signal or directly transmitted 94 over the Internet 20. The client software 106 extracts the URLs and retrieves the particular web pages as described above. The web pages are then synchronized with the particular video frames and presented to the user. It is understood that a hyperlink may exist on the web site that will allow the user to automatically load the client software and call up the specific television channel referenced in the web site. For example, someone browsing the Internet 20 may come upon a major television network's web site. It is possible then to scroll to an interesting story and then to click on an hyperlink to turn on the software which tunes the TV window to the network.

Instead of receiving the video program from a transmission means, the video program may be addressed directly from the user site if the video program, with or without embedded URLs, has been stored on appropriate means. The storage means may be a videotape in any format, such as VHS or Beta, or an optical disc in any format, such as DVD or CD-ROM. In this case, the user PC 16 and/or television 114 are connected to a video tape player, a disc drive, or other appropriate device.

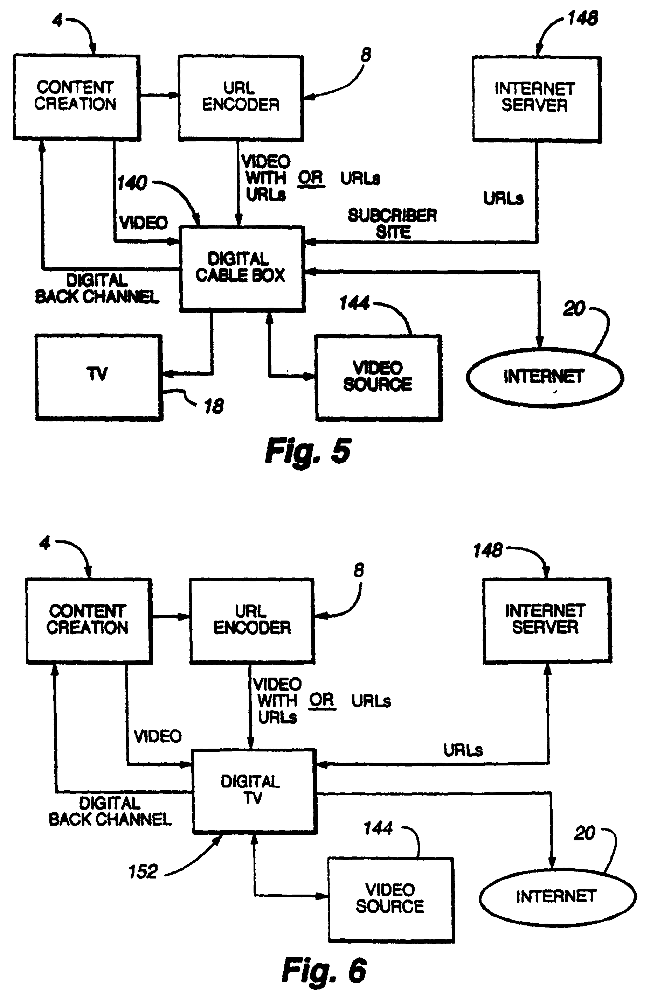

Figures 5 and 6 show two alternative examples of systems which may be employed. As shown in Figure 5, a user may view an interactive program using a television set 18 or other display monitor in conjunction with a digital cable box 140. In this case, the digital cable box 140 performs the functions of the personal computer 16 shown in Figures 1, 2 and 4, and the client software is stored in memory in the digital cable box 140. In one embodiment, the digital cable box 140 includes two tuners, thus allowing both the web page and the video program to be simultaneously viewed on the same screen. If video and web stream, however, are carried on one channel, then only one tuner is necessary.

The client software retrieves URLs from the received video program, directly from the Internet connection 20 or via a separate data channel, interprets these URLs and directs the web enabled browser to retrieve the particular relevant web pages, and synchronizes the retrieved web pages to the video content for display on the television 18. The relevant web pages are preferably shown in one frame of the television 18 while the video program is displayed in another frame. Alternatively, the web page can replace the video program on the display.

In this embodiment, the digital cable set top box 140 receives the television program from the multi-channel cable. The URLs can be encoded into the digital program channel using MPEG1, MPEG2, MPEG4, MPEG7 or any other compression video scheme. Alternatively, the URLs can be transmitted to the digital cable boxes 140 from an Internet server 148. The digital cable box 140 decodes the URLs from the digital video signal or directly transmitted over the Internet 20. The client software decodes the URLs and retrieves the particular web pages as described above. Preferably, the web pages are synchronized with the particular video frames and presented to the user.

As with all the embodiments described above, instead of receiving the video program from a transmission means, the video program may be addressed directly from a local video source 144 if the video program, with or without embedded URLs, is stored on a storage means such as a video tape or optical disc. In this embodiment, the digital cable box 140 is connected to a VCR, disc drive or other appropriate device.

Figure 6 illustrates an embodiment where a digital TV 152 is the remote reception unit and performs the functions of the personal computer, shown in Figures 1, 2 and 4, and the digital cable box 140 shown in Figure 5. A processor means and memory are incorporated in the digital TV 152, and the client software and web browser software are implemented in memory in the digital TV 152. All of the functions described above with reference to the other embodiments are performed in a similar manner by the digital TV 152 embodiment.

Although the digital cable box/TV 140, 18 and digital TV 152, shown in Figures 5 and 6, are incorporated into the embodiment of Figure 1, in substitution for the PC 16, they may also be substituted for the PC 16 shown in Figures 2 and 4.

A user may view the video and web content on one screen (in two windows), or with the video on one display screen and the web content on a separate display monitor. Alternatively, a user may access the video or web content separately. Thus, a user may branch from video to web content and vice versa.

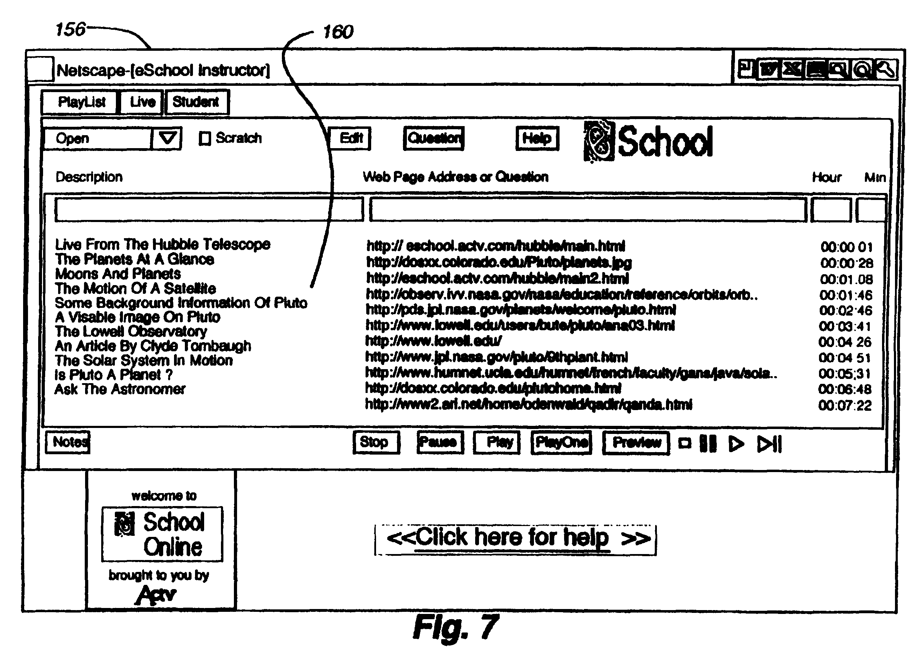

The systems described herein are well-suited to the education environment. Thus, students and teachers may access one or more web servers. Software components including instructor and student user software, authoring software and database assessment software are provided. An instructor may, for example, use content creation software on a personal computer to easily integrate into the curriculum current information published on the web through an interface 156 shown in Figure 7. The instructor creates a playlist (i.e. linkfile) 160, the playlist 160 comprising a list of web pages, text notes and questions. The web sites and questions are set out in a predetermined order and can be assigned times. Preferably, the URLs identifying the web site and time stamps are sent automatically to the desktop of each student in the virtual community, either during a playback of a pre-recorded program or during a live event.

At each of the student workstations, the program is directed by the playlist 160. In other words, the playlist 160 provides the structure for the program. At predetermined times as indicated by the playlist 160, the browser will fetch and display a web page in a frame on the computer screen. Because program events can be set up in this manner at predetermined times, the entire program and playlist can be prerecorded and stored in a web database for later access by students.

It will be appreciated that the students and the instructor may be located anywhere, as long as they are all connected to the web. Because a server controls the program, the instructor output comes from the server and the student workstations are automatically updated by the web server.

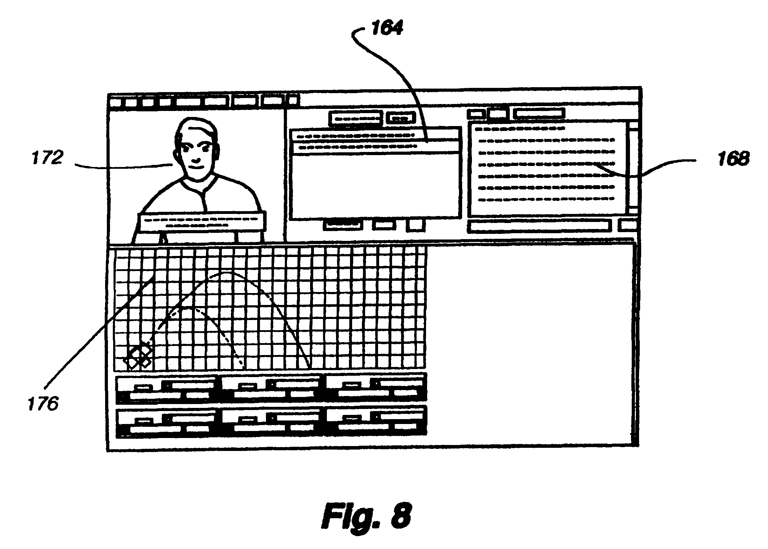

This educational embodiment integrates web content and other media with collaborative groupware functionality to create an interactive environment for students and teachers. The student may receive a traditional video lesson through a frame in his or her web browser, or from a television. Separate frames may be simultaneously provided as shown in Figure 8, which shows the browser displaying: web pages 176 automatically delivered to each student's desktop with information or exercises that complement the video presentation; a chat dialogue frame 168 for conversing with the instructor and/or other students online; and an interactive playlist 164 of web pages and questions comprising the lesson.

In the student interface of Figure 8, each student may perform a virtual experiment, for example, during a physics lesson to learn about gravity. In addition, the students may converse with one another and with the instructor using the chat dialogue frame 168. They may also send web pages to one another and provide answers to questions from the teacher via the chat dialogue frame 168 of the student interface 176. With the chat feature, students may break into subgroups for collaborative learning. Whenever a student in the group sends a message, the message is sent to the Internet server 20 and every other student in the subgroup receives and views the message in their chat dialogue frame 168.

The instructor, however, may retain control over the chat feature. For example, the instructor may terminate the chat feature or web push to terminate unruly on-line conversations or the sending of web pages by students.

The systems described herein are more powerful than conventional distance learning systems as they allow the instructor to freely and conveniently exercise almost any type of testing strategy. The instructor may test students using a combination of the chat dialogue feature and web pages. For example, multiple choice questions and short answer questions can appear in the chat window 168. Essay questions, requiring longer answers, become web pages. As mentioned above, students can perform virtual experiments on-line. Once the instructor's personal computer receives student answers, student scoring may be presented to the instructor in any format including tables, charts, diagrams, bar graphs, etc. The instructor, thus, may analyze the results and has the capability of providing real-time feedback to the students.

Students may also receive individualized feedback via branched interactive audio, video and/or graphics responses. For example, the workstation may branch to a particular audio response, preferably prerecorded in the instructor's own voice, based on the student response to a multiple-choice question. A plurality of potential audio responses may be made available at the student's workstation, for example, by a method as described in US patent No. 5,537,141. Additionally and/or alternatively, personalized video, audio and graphics segments may be delivered and displayed to the student based on a student answer or personal profile, for example, in a manner as described in US patent No. 5,724,091.

Responses to student answers may be more substantive using a memory feature comprising an algorithm which selects an interactive response to the user based not only on the student's current answer selection, but also on the student's previous responses. The algorithm, preferably stored in memory at each student's workstation and under processor control, selects an output interactive response based on student responses. In an example, a student who gets three or more answers in sequence right receives a more difficult question. However, a student who fails to correctly answer one or more of the three questions receives an easier question.

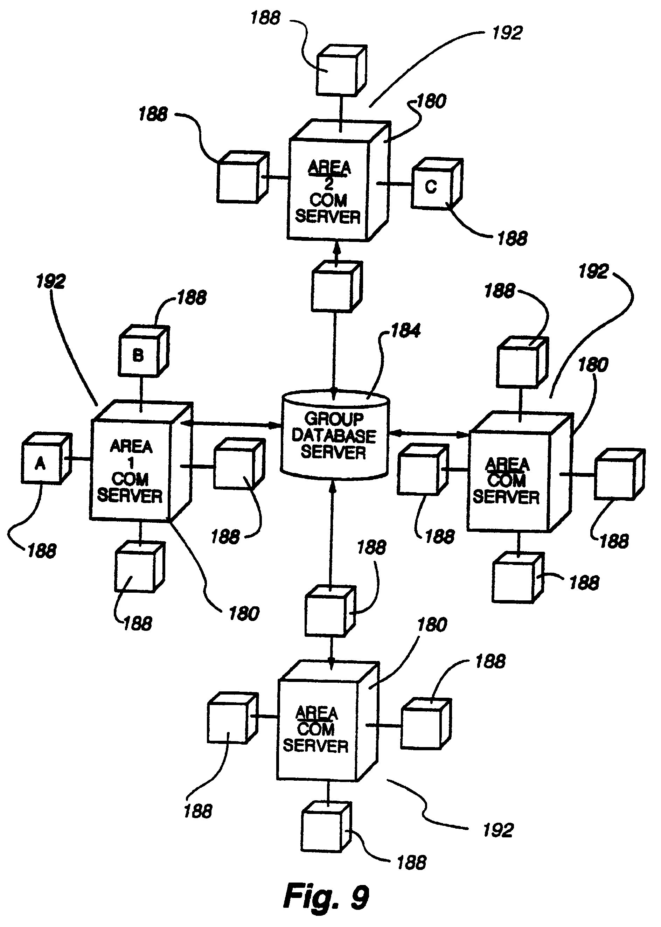

The system illustrated in Figure 9 is capable of servicing large numbers of users, for example, several schools. As shown, communications servers 180 distribute and route message across a LAN, WAN and the Internet. At the heart of the system is a group database server 184, and this is surrounded by several communication servers 180 which each serve an area 192. Each communication server 180 is surrounded by squares representing user stations 188. The communication servers 180 are organized in node relationships with one another.

Each node is responsible for serving an area 192. An area 192 is defined as a virtual location serviced by a single communication server 180 (or "com server"). An area 192 may be a single school, an office, or may consist of several actual physical locations. The defining characteristic of an area 192 is that messages sent from one member of an area 192 to another need not be routed outside of the servicing com server 180.

An area member is analogous to the frequently used term "user". For example, a "user" may be a student in an educational environment.

The distributed communication system shown in Figure 9 permits the dynamic addition of communication servers 180 within a group with little or no administrative tasks as well as the addition of groups within an overall communications network. A communication server group consists of several defined virtual areas 192 (preferably, consisting of no more than 250 members each), each area 192 serviced by a single corn server 180. This system allows members of one area 192, or group, to easily communicate with members of another area 192 or group without any configuration changes.

In the past, service of very large numbers of users has required large expensive servers and networks. Furthermore, as the user base increased, performance suffered and the hardware had to be upgraded to service the demand.

The distributed communication system allows the same, relatively inexpensive, machines to serve an ever-increasing user base. This is accomplished by routing messages from one server to another when necessary following substantially the same core pattern as IP routing and DNS lookups. If a message is for a member not belonging to the current area 192 or group, the message is routed through the distributed communication system until its destination, or someone who knows the destination and can deliver the message, is found. The destination may be cached so subsequent messages for that member or group may be more efficiently delivered.

Referring to Figure 9, if a message is posted by member "A" and is intended only for the members of group 1, the message never leaves the area 1 com server. However, if the message is intended for members of area 1 and for members of area 2, the area 1 com server forwards the message to the group database server 184. The message is broadcast to the members of area 1 and tagged in the group database server 184 as belonging to area 2. The message is then routed to area 2 and broadcast to area 2 members. With this technique, any member may potentially send a message to any other member. If the area com server 180 does not recognize the destination, the message is forwarded up the line. Each com server 180 does not need to know about any other server 180. Messages are routed until they delivered. If undeliverable, the original sender is notified.

New areas 192 can be added on the fly. When a new com server 180 is added to the network, it registers itself with the database application. Henceforth, any message destined for the new area 192 may be routed properly without altering the other area servers 180.

This method and system works for global messages or for user to user messages. Furthermore, new groups may also be dynamically added. Once added, each new group database server 184 registers itself with the existing database servers 184. This distribution of load permits nearly unlimited expansion with existing software and hardware. Each server manages a finite number of members, cumulatively serving a growing community.

Users need not be informed as to the particular com server 180 they should connect to. Members are directed to a single URL. The selection of the server for user connection is determined by load balancing software. In this manner, the network may appear to be a global network of servers or simply a local classroom.

The architecture described, which uses database servers as routing gateways, enables the system to serve with minimum administration and configuration and with lower end, cost-effective hardware.

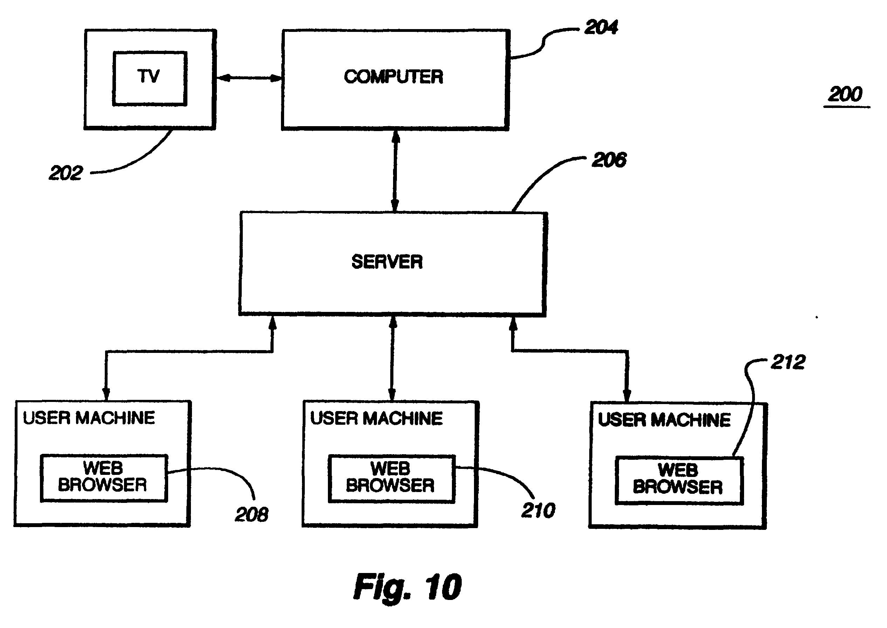

Figure 10 is a diagram of a system illustrating how a user obtains a shared whiteboard among members in a common chat room. Chat rooms enable a grouping of network users to receive particular content. Examples showing the use of chat rooms are described above with respect to chat dialogue frame 168 shown in Figure 8, and in U.S. patent application No. 09/396693 filed 15th September 1999.

System 200 shown in Figure 10 comprises a server 206 to which members at user machines, using web browsers 208, 210, or 212, send a command to obtain a particular frame from a television broadcast 202. To obtain the frame, a computer 204 captures the frame from broadcast 202. Once the frame is captured, computer 204 publishes the frame by sending it to server 206. By sending the frame to server 206, computer 204 makes the content of the frame available to members at the user machines. A member connected to server 206, using functionality referred to as a whiteboard applet embedded in web browser 208, 210, or 212, commands the web browser to obtain the frame content. Prior to server 206 distributing the frame content to members in a common chat room, the server 206 may push a whiteboard environment to web browser 208, 210, or 212, and load the frame into the whiteboard environment.

Once the whiteboard applet obtains the graphics or other content, members in the chat room may be assigned particular drawing privileges. For example, they may be permitted to draw on the shared whiteboard graphic or to only observe the collaborative graphical experience. This added capability to the system described above allows the user or chat room member to experience over the web graphical commentaries on various broadcasts such as, for example, sports strategies, fashion styles, music video commentaries, art, news, and/or education. Freeze frame and graphical collaboration brings the typical television graphical freeze frame experience to the web as a more collaborative and open type of graphical commentary.

During a football game, for instance, after an interception, users may request, or automatically receive, an image which has been captured from the video presentation and distributed to their whiteboards. One of the users may then draw over the image, in this way commenting on the development of the play. Other users in the same room will see the first user's drawing, and may comment on the drawing, either through the whiteboard, through a synchronous chat session and/or through telephony. The whiteboard thus provides drawing capabilities to viewers which were previously available only to the professional commentator in a television control room. In addition, the whiteboard enables and empowers a community to be generated around the television program.

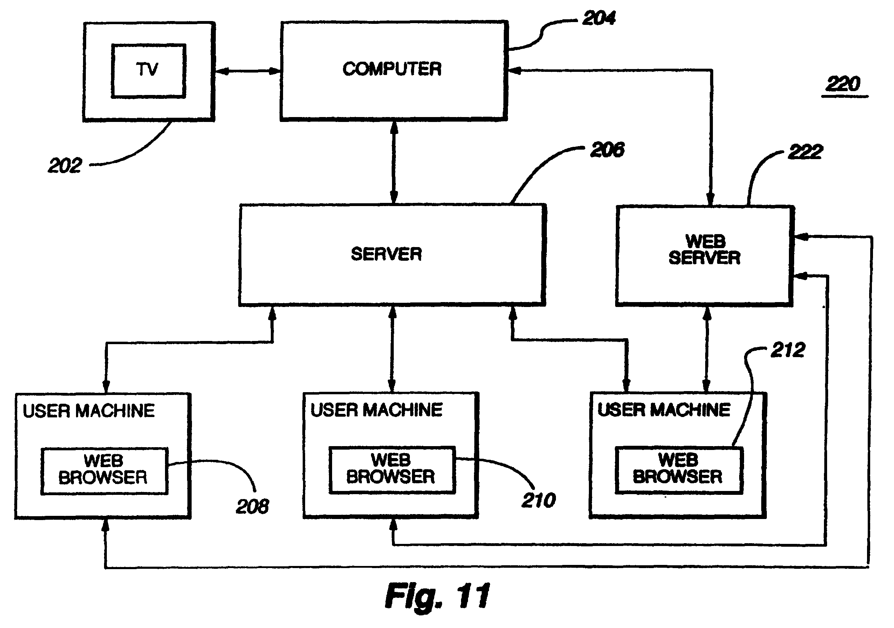

Figure 11 is a diagram of an alternative system 220 for implementing a shared whiteboard. In system 220, the captured frame graphics are sent to a web server 222. Computer 204 pushes a show graphics command to server 206, which sends the command to web browsers 208, 210, and 212 in the user machine. Upon receiving the graphics command, a whiteboard applet in each of the web browsers 208, 210, and 212 pulls the graphics from web server 222 onto the whiteboard.

In another alternative, server 206 may grab a frame directly from television broadcast 202 using, for instance, the JAVA media framework. Once the server 206 receives the frame, it pushes the whiteboard environment to a web browser 208, 210, or 212 requesting the frame, and sends the frame content (graphics) on to the whiteboard environment. Members in the chat room are thus able to draw on a shared whiteboard, depending upon their drawing privileges.

In another embodiment, if computer 204 has access to the video signal from television broadcast 202, a member using the corresponding web browser may grab the frame from the computer 204 and send it to other members in the common chat room. In this arrangement, no television would be necessary since the computer 204 already has video capabilities and access to the video signal. Server 206 pushes the whiteboard environment to the members' web browsers 208, 210, and 212 and then sends the graphics on to the whiteboard. The members in the common chat room are then able to share information on the whiteboard, depending upon their drawing privileges, using illustrations, text, and/or other types of information.

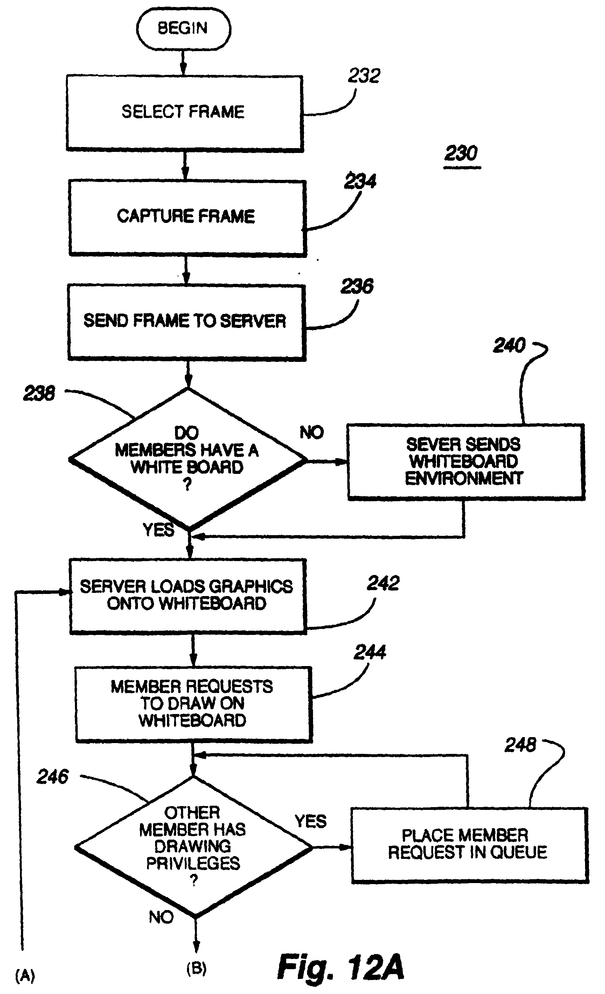

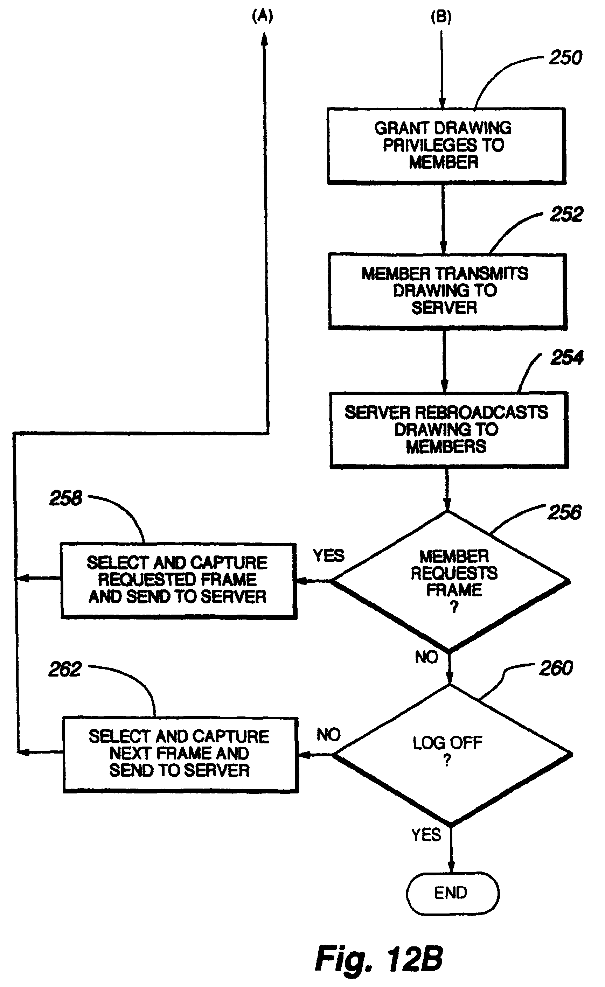

Figure 12 is a flow chart of a process 230 for generating and implementing shared whiteboard graphics among members in a common chat room utilizing systems 200 and 220, and alternative systems identified above. Process 230 may be implemented in software in apparatus such as a web server 222 and/or server 206, and/or corresponding functions may be implemented in a web browser on a user machine. Some or all of the functions may reside within a whiteboard applet. The term "whiteboard" is used only as a label to describe an applet and/or software functions arranged to implement functions as shown in process 230.

In process 230, a graphic frame is selected from television broadcast 202 (step 232). The graphic frame may be selected automatically by the server or selection may be determined by a particular user or chat room member. For example, the frame may be selected by an individual in a control room of a television production facility or by a member in a chat room, for example, someone who is viewing a television broadcast of a particular sporting event.

To obtain the selected frame, computer 204 captures the frame from the television broadcast 202 (step 234). Once the frame is captured, the computer 204 publishes the frame graphics to server 206 (step 236), thus making the graphics publicly available to members of a particular chat room. When the server 206 receives the graphics from the frame, it determines whether to invoke the whiteboard environment, and it waits to start the whiteboard environment if the delivery of the graphics failed. Alternatively, since the whiteboard functionality may be part of the software controlling the server 206, the server 206 may send the whiteboard environment to web browsers 208, 210, and 212 when it obtains a command to capture a frame.

Computer 204 commands server 206 to determine if a whiteboard environment should be pushed to all the members in the common chat room or if the members have the whiteboard environment already loaded in web browsers 208, 210, and 212 (step 238). If members in the chat room do not have the whiteboard environment loaded, server 206 pushes the whiteboard environment to the members in the chat room (step 204).

The whiteboard environment may contain an applet or other functionality for controlling receipt and display of frame content and for controlling members' ability to draw in the transmitted frame. For example, the whiteboard environment may include display of a page, referred to as a whiteboard, on the user's machine for use in displaying the frame content. When the members in the chat room have the whiteboard environment, the whiteboard may be located and appear anywhere within the screen of their associated display devices, such as in the bottom of the screen in a push frame representing a displayed borderline for containing the pushed frame content. Upon invoking the whiteboard environment, the server 206 loads the graphics onto the whiteboard (step 242). If a member in the chat room is already viewing a graphic image on a whiteboard, the member may view multiple images on the whiteboard using multiple displayed frames.

A member having appropriate drawing privileges may draw on the whiteboard with the graphic as its background in order to modify the frame content. For example, a member may send a drawing request to the server 206 through web browser 208, 210, or 212 using a function in the whiteboard environment such as a whiteboard applet (step 244). In the illustrated embodiment only one member at a time can draw on the whiteboard. However, it is alternatively possible to enable more than one member to draw on the whiteboard at the same time. As shown, the server 206 determines if another member currently has drawing privileges, and forms a queue of requests for drawing privileges in the order in which they arrive (step 246). If another member has drawing privileges, that is, that other member currently requests to draw on the whiteboard, the server 206 places the member request for drawing privileges in the queue or otherwise saves the request (step 248). If no other member has drawing privileges, meaning either that the queue is empty or that the member's request has reached the front of the queue, the server 206 grants drawing privileges to the member. The server 206 may send an indication to the corresponding web browser to indicate to the member that the drawing privileges have been granted (step 250). When the one member draws on the whiteboard, others in the same chat room may still view the frame content.

The server 206 may additionally and/or alternatively control drawing privileges using a moderator, who is a privileged whiteboard user with the capability to grant drawing privileges. The moderator, for example, may be a person in the control room of television broadcast 202. In the event that a member requests drawing privileges using a moderator, the request is sent through server 206 to the moderator in the control room. This method of requesting to draw is referred to as "hand raising".

A member who has been granted drawing privileges may then draw upon the whiteboard to modify it, and then send the drawing with the modifications to the server 206 (step 252). A member may draw upon the whiteboard in a number of ways. For example, the member may use a cursor control device to draw lines on the whiteboard, a keyboard to add text to the whiteboard and/or a control device (which may be the cursor control device) to copy and paste items in the whiteboard. The text may include, for example, x's and o's drawn on action of a sporting event such as a play in a football game. The drawing may include, for example, lines, graphics, text, and/or any multimedia information. Drawing commands may include, for example, the width of the line, color of the line, text, a type of font, and vertical and horizontal coordinate of the line, and/or text. Server 206 rebroadcasts the drawing to other members of the chat rooms, and they may view the frame content with the drawing on their machines (step 254).

It will be appreciated that modification of the frame content through drawing privileges permits collaborative communication among chat room members. The members on-line in the particular chat room may comment on the graphic frame obtained from the television broadcast which may additionally include drawings from one of the members. The graphic frame may be of action within a sporting event such as a football game, and this capture of the action provides the background for a whiteboard shared among all the members of a common chat room following the event. A member may capture any graphic frame and then have the frame be a background to the whiteboard and be able to share, by illustration, what the members in the chat room are discussing.

A member may also request particular frames, and the server 206 determines if a particular member has requested a frame (step 256). A user may request a particular frame by, for example, using a cursor control device to select or "click on" the viewing of a television broadcast whereby the associated web browser sends the request to the computer 204. Upon receiving the request, computer 204 selects and captures the requested frame and sends it to server 206 (step 258).

Server 206 may also detect whether particular members have logged off the network or the chat room (step 260). While members remain logged into the network and chat room, computer 204 may continue to select and capture frames and send the associated content to the server 206 (step 262). Computer 204 may be programmed to select particular frames, for example, it may be arranged to select frames at particular time intervals.

To implement the shared whiteboard, system 200 may use two connections with server 206, one to the whiteboard functionality and another to the chat room functionality. A member user has multiple options with system 200 having two connections. For example, a member may stay connected to the server 206 with the chat room functionality and not the whiteboard functionality, or alternatively may stay connected to the whiteboard functionality and not the server 206. In the first example, the member may watch the graphics but would not be able to participate in the graphic commentary. In the second example, the member may participate in the graphic commentary and replay the drawings and the entire event as it occurred in time.

It will be appreciated that methods and apparatus of the present invention enable a synergistic experience combining the vast resources of the Internet with the presentation capabilities of television to be created.

It will be appreciated that modifications in, and variations to, the embodiments described and illustrated may be made within the scope of the invention as defined by the accompanying claims.

## Claims

1. A method of presenting program frame content to a user machine, comprising the steps of:
obtaining a frame of information from a displayed program;
transmitting said frame to a user machine for display concurrent with the display of the program; and
permitting a user of the machine to modify the displayed frame.

2. A method as claimed in Claim 1, wherein the transmitting step comprises transmitting the program and the frame for simultaneous display on a display device associated with the user machine.

3. A method as claimed in Claim 1, wherein the transmitting step comprises transmitting the program and the frame for simultaneous display on a television associated with the user machine.

4. A method as claimed in Claim 1, wherein the transmitting step comprises transmitting the program for display on a television associated with the user machine, and transmitting the frame for display on a display device associated with the user machine.

5. A method as claimed in any preceding claim, wherein the transmitting step comprises transmitting the frame to a plurality of associated computers for display to a plurality of users.

6. A method as claimed in Claim 5, further comprising transmitting the modifications to the displayed frame to the plurality of associated computers for altering the displayed frame in accordance with the transmitted modifications.

7. A method as claimed in Claim 5 or Claim 6, further comprising selectively permitting the plurality of users to modify the displayed frame.

8. A method as claimed in Claim 7, wherein the plurality of users are permitted to modify the displayed frame in the order in which the plurality of users requested to modify the displayed frame.

9. A method as claimed in any preceding claim, wherein a user is permitted to identify the frame to be obtained from the program.

10. A method as claimed in any preceding claim, wherein the transmitting step comprises transmitting to the user machine an environment in which to display the frame.

11. A method as claimed in any preceding claim, wherein the frame and the program are each displayed on at least one of: a digital television, a computer monitor, a handheld computer, a picture-in-picture television, and a mobile wireless device.

12. A method as claimed in any preceding claim, wherein the program is at least one of: a sporting event, a television show, a movie, a computer game, an educational program, an entertainment program, a satellite broadcast, a cable broadcast, a live program, and a pre-recorded program.

13. A method as claimed in any preceding claim, wherein the user modifies the displayed frame using an input device.

14. A method as claimed in Claim 13, wherein the input device is at least one of: a cursor-control device, a keyboard, a drawing pad, and a screen-input device.

15. A method as claimed in any preceding claim, wherein the user modifies the displayed frame with at least one of: graphics, text, and multi-media content.

16. A method as claimed in any preceding claim, further comprising the step of permitting a user to communicate with other users using a chat room interface.

17. A method as claimed in Claim 16, wherein the user communicates with other users via synchronous chatting.

18. A method as claimed in Claim 16, wherein the user communicates with other users via telephony.

19. Apparatus for presenting program frame content to a user on a machine, comprising:
obtaining means for obtaining a frame of information from a displayed program;
transmitting means for transmitting the frame to a user machine for display concurrent with the display of the program; and
means for permitting a user of the user machine to modify the displayed frame.

20. Apparatus as claimed in Claim 19, wherein said transmitting means is arranged to transmit the program and the frame for simultaneous display on a display device associated with the machine.

21. Apparatus as claimed in Claim 20, wherein the display device is at least one of: a digital television, a computer monitor, a handheld computer, a picture-in-picture television, and a mobile wireless device.

22. Apparatus as claimed in Claim 19, wherein said transmitting means is arranged to transmit the program and the frame for simultaneous display on a television associated with the machine.

23. Apparatus as claimed in Claim 19, wherein said transmitting means is arranged to transmit the program for display on a television associated with the machine and to transmit the frame for display on a display device associated with the machine.

24. Apparatus as claimed in any of Claims 19 to 23, further comprising means for transmitting the frame to a plurality of associated computers for display to a plurality of users.

25. Apparatus as claimed in Claim 24, further comprising means for transmitting the modifications to the displayed frame to the plurality of associated computers for altering the displayed frame in accordance with the transmitted modifications.

26. Apparatus as claimed in Claim 24 or Claim 25, wherein said means for permitting modifications selectively permits the plurality of users to modify the displayed frame.

27. Apparatus as claimed in Claim 26, wherein said means for permitting is arranged to selectively permit the plurality of users to modify the displayed frame in the order in which the plurality of users requested to modify the displayed frame.

28. Apparatus as claimed in any of Claims 19 to 27, further comprising means for permitting a user to identify which frame to obtain from the program.

29. Apparatus as claimed in any of Claims 19 to 28 wherein said transmitting means is arranged to transmit to the user machine an environment in which to display the frame.

30. Apparatus as claimed in any of Claims 19 to 29, wherein the program is at least one of: a sporting event, a television show, a movie, a computer game, an educational program, an entertainment program, a satellite broadcast, a cable broadcast, and a pre-recorded program.

31. Apparatus as claimed in any of Claims 19 to 30, further comprising an input device to enable a user to modify the displayed frame.

32. Apparatus as claimed in Claim 31, wherein the input device is at least one of: a cursor-control device, a keyboard, a drawing pad, and a screen-input device.

33. Apparatus as claimed in Claim 31 or Claim 32, wherein a user modifies the displayed frame with at least one of: graphics, text, and multi-media content.

34. Apparatus as claimed in any of Claims 19 to 33, further comprising means for transmitting the frame to a plurality of user machines for display to a plurality of users, and means for permitting one user to communicate with other users using a chat room interface.

35. Apparatus as claimed in Claim 34, wherein the user communicates with other users via synchronous chatting.

36. Apparatus as claimed in Claim 34, wherein the user communicates with other users via telephony.

37. A computer-readable medium containing programming instructions for controlling a computer system to present program frame content to a user machine by:
obtaining a frame of information from a displayed program;
transmitting the frame to a user machine for display;
permitting a user of the user machine to modify the displayed frame.

38. A computer-readable medium as claimed in Claim 37, wherein the frame is transmitted to a user machine concurrently with display of the program.

39. A computer-readable medium as claimed in Claim 37 or Claim 38, wherein the instructions of transmitting the frame further comprise transmitting the program and the frame for simultaneous display on at least one of: a digital television, a computer monitor, a handheld computer, a picture-in-picture television, and a mobile wireless device.

40. A computer-readable medium as claimed in Claim 37 or Claim 38, wherein the instructions of transmitting the frame further comprise transmitting the program to a first display device and transmitting the frame to a second display device where at least one of the first and second display devices are selected from: a digital television, a computer monitor, a handheld computer, a picture-in-picture television, and a mobile wireless device.

41. A computer-readable medium as claimed in Claim 40, wherein the program and frame are presented concurrently on the first and second display devices.

42. A computer-readable medium as claimed in any of Claims 37 to 41, wherein the instructions of transmitting of the frame comprise transmitting the frame to at least one of the plurality of user machines for display to a plurality of users.

43. A computer-readable medium as claimed in Claim 42, further comprising transmitting the modifications to the displayed frame to at least one of the plurality of user machines for altering the displayed frame in accordance with the modifications to the displayed frame.

44. A computer-readable medium as claimed in Claim 42 or Claim 43, wherein the permitting instruction comprises selectively permitting the plurality of users to modify the displayed frame.

45. A computer-readable medium as claimed in Claim 44, wherein the permitting instruction comprises selectively permitting at least one of the plurality of users to modify the displayed frame in the order in which the at least one of the plurality of users requested to modify the displayed frame.

46. A computer-readable medium as claimed in any of Claims 37 to 45, further comprising permitting a user to identify which frame to obtain from the program.

47. A computer-readable medium as claimed in any of Claims 37 to 46, wherein the transmitting instruction comprises transmitting to a user machine an environment in which to display the frame.

48. A computer-readable medium as claimed in any of Claims 37 to 47, wherein the program is selected from: sporting events, television shows, movies, computer games, educational programming, entertainment programming, satellite broadcast, cable broadcast, and pre-recorded programming.

49. A computer-readable medium as claimed in any of Claims 37 to 48, further comprising instructions enabling a user to modify the displayed frame using an input device.

50. A computer-readable medium as claimed in any of Claims 37 to 49, further comprising instructions permitting a user to communicate with other users using a chat room interface.

51. A computer-readable medium as claimed in Claim 50, wherein the user communicates with other users via synchronous chatting.

52. A computer-readable medium as claimed in Claim 50, wherein the user communicates with other users via telephony.

53. Apparatus at a remote location for presenting program frame content to a user machine, comprising:
means for obtaining a frame of information from a program;
means for transmitting the frame to a user machine for display to a user; and
means for permitting a user to modify the displayed frame.

54. Apparatus as claimed in Claim 53, wherein the frame is transmitted to a user machine concurrently with display of the program.

55. Apparatus as claimed in Claim 53, wherein the means for transmitting the frame further comprises means for transmitting the program and the frame for simultaneous display on: a digital television, a computer monitor, a handheld computer, a picture-in-picture television, and a mobile wireless device.

56. Apparatus as claimed in Claim 53, wherein the means for transmitting the frame further comprises means for transmitting the program to a first display device and means for transmitting the frame to a second display device where at least one of the first and second display devices is selected from: a digital television, a computer monitor, a handheld computer, a picture-in-picture television, and a mobile wireless device.

57. Apparatus as claimed in Claim 56, wherein the program and frame are presented concurrently on the first and second display devices.

58. Apparatus as claimed in any of Claims 53 to 56, wherein the transmitting means comprises means for transmitting the frame to at least one of a plurality of user machines for display to at least one of a plurality of users.

59. Apparatus as claimed in Claim 58, further comprising means for transmitting a modification to the displayed frame to at least one of the plurality of user machines for altering the displayed frame in accordance with the modification.

60. Apparatus as claimed in Claim 58 or Claim 59, wherein the permitting means selectively permits one of the plurality of users to modify the displayed frame.

61. Apparatus as claimed in Claim 60, wherein the permitting means selectively permits one of the plurality of users to modify the displayed frame in an order in which the users requested modifications to the displayed frame.

62. Apparatus as claimed in any of Claims 53 to 61, further comprising means for permitting a user to identify which frame to obtain from a program.

63. Apparatus as claimed in any of Claims 53 to 62, wherein the transmitting means comprises means for transmitting to the machine an environment in which to display the frame.

64. Apparatus as claimed in any of Claims 53 to 63, wherein the program is at least one of: a sporting event, television program, movie, computer game, educational program, entertainment program, satellite broadcast, cable broadcast, live program and a pre-recorded program.

65. Apparatus as claimed in any of Claims 53 to 64, further comprising means for permitting a user to communicate with other users using a chat room interface.

66. A method of presenting program frame content to a user machine, comprising:
obtaining a frame of information from a program; and
publishing the frame of information on a server for distribution to at least one of a plurality of user machines.

67. A method as claimed in Claim 66, further comprising receiving a request from a server to obtain a frame of information from the program.

68. A method as claimed in Claim 66 or Claim 67, wherein the frame of information is obtained from the program by at least one of the following: television broadcast, cable television, satellite broadcast, Internet, intranet, network, and radio.

69. A method as claimed in any of Claims 66 to 68, wherein the frame of information is published to the server by at least one of the following: television broadcast, cable television, satellite broadcast, Internet, intranet, network, and radio.

70. A method as claimed in any of Claims 66 to 69, wherein the server is a web server.

71. A method as claimed in any of Claims 66 to 70, further comprising:
receiving commands from a server to obtain a frame of information from a program;
publishing the frame of information to a web server for distribution to users; and
transmitting a show graphics command to the server for transmission to users.

72. A method as claimed in any of Claims 66 to 70, further comprising:
selectively permitting at least one of a plurality of users to modify the frame of information; and
receiving modifications to the frame of information.

73. A method as claimed in Claim 72, further comprising publishing the modifications to the frame of information to a web server for distribution to at least one of a plurality of users.

74. A method as claimed in Claim 72 or Claim 73, further comprising publishing the modifications to the frame of information to at least one of a plurality of users.

75. A method as claimed in any of Claims 66 to 74, further comprising permitting a user to identify which frame to obtain from the program.

76. A method as claimed in any of Claims 66 to 75, further comprising transmitting to at least one user machine a shared whiteboard environment in which to display the frame of information.

77. Apparatus for presenting program frame content to a user machine, comprising:
frame means for obtaining a frame of information from a program; and
publishing means for publishing the frame of information on a server for distribution to at least one of a plurality of users.

78. Apparatus as claimed in Claim 77, further comprising receiving means for receiving a request from a server to obtain a frame of information from the program.

79. Apparatus as claimed in Claim 77 or Claim 78, wherein the frame of information is obtained from the program by transmission by at least one of: television broadcast, cable television, satellite broadcast, Internet, intranet, network, and radio.

80. Apparatus as claimed in any of Claims 77 to 79, wherein the frame of information is published to the server by transmission by at least one of: television broadcast, cable television, satellite broadcast, Internet, intranet, network, and radio.

81. Apparatus as claimed in any of Claims 77 to 80, wherein the server is a web server.

82. Apparatus as claimed in any of Claims 77 to 81, further comprising:
receiving means for receiving commands from a server to obtain a frame of information from a program; and
transmitting means for transmitting a show graphics command to the server for transmission to users, wherein the server is a web server.

83. Apparatus as claimed in any of Claims 77 to 82, further comprising:
means for selectively permitting at least one of a plurality of users to modify the frame of information; and
receiving means for receiving modifications to the frame of information.

84. Apparatus as claimed in Claim 83, further comprising publishing means for publishing the modifications to the frame of information to a web server for distribution to at least one of a plurality of users.

85. Apparatus as claimed in Claim 83 or Claim 84, further comprising publishing means for publishing the modifications to the frame of information to at least one of a plurality of users.

86. Apparatus as claimed in any of Claims 77 to 85, further comprising means for permitting a user to identify which frame to obtain from the program.

87. Apparatus as claimed in any of Claims 77 to 86, further comprising means for transmitting to a user machine a shared whiteboard environment in which to display the frame of information.

88. A computer-readable medium containing programming instructions for controlling a computer system to present program frame content to a user machine, by:
obtaining a frame of information from a program; and
publishing the frame of information on a server for distribution to at least one of a plurality of user machines.

89. A computer-readable medium as claimed in Claim 88, further comprising instructions for receiving a request from a server to obtain a frame of information from the program.

90. A computer-readable medium as claimed in Claim 88 or Claim 89, wherein the frame of information is obtained from the program by transmission by at least one of: television broadcast, cable television, satellite broadcast, Internet, intranet, network, and radio.

91. A computer-readable medium as claimed in any of Claims 88 to 90, wherein the frame of information is published to the server by transmission by at least one of: television broadcast, cable television, satellite broadcast, Internet, intranet, network, and radio.

92. A computer-readable medium as claimed in any of Claims 88 to 91, wherein the server is a web server.

93. A computer-readable medium as claimed in any of Claims 88 to 92, further comprising instructions for:
receiving request commands from a server to obtain a frame of information from a program;
publishing the frame of information to a web server for distribution to users; and
transmitting a show graphics command to the server for transmission to users.

94. A computer-readable medium as claimed in any of Claims 88 to 93, further comprising instructions for:
selectively permitting at least one of a plurality of users to modify the frame of information; and
receiving modifications to the frame of information.

95. A computer-readable medium as claimed in Claim 94, further comprising publishing the modifications to the frame of information to a web server for distribution to at least one of a plurality of user machines.

96. A computer-readable medium as claimed in Claim 94 or Claim 95, further comprising instructions for publishing the modifications to the frame of information to at least one of a plurality of user machines.

97. A computer-readable medium as claimed in any of Claims 88 to 96, further comprising instructions for permitting a user to identify which frame to obtain from the program.

98. A computer-readable medium as claimed in any of Claims 88 to 97, further comprising transmitting to a user machine a shared whiteboard environment in which to display the frame of information.

99. A method of enabling the creation of program frame content on a user machine, comprising:
receiving a video signal;
grabbing a frame of information from the video signal; and
transmitting the frame of information to other user machines.

100. A method as claimed in Claim 99, wherein users of the user machine and of the other user machines are members of a common chat room.

101. A method as claimed in Claim 99 or Claim 100, further comprising:
modifying the frame of information; and
transmitting the modified frame of information to other user machines.

102. A method of a user machine receiving program frame content, comprising:
transmitting a request for a frame of information to a server; and
receiving a frame of information from the video signal.

103. A method as claimed in Claim 102, further comprising receiving modifications to a frame of information from the server.

104. A method as claimed in Claim 102 or Claim 103, further comprising displaying the frame of information on a display device associated with the user machine so that the user can see the frame of information.

105. A method of presenting program frame content to at least one of a plurality of user machines, comprising:
receiving a video signal of a program;
grabbing a frame of information from the video signal;
publishing the frame of information to a server for distribution to at least one of a plurality of user machines;
transmitting the frame of information from the server for distribution to at least one of a plurality of user machines; and
displaying the frame of information to at least one of a plurality of user machines.

106. A method of presenting modified program frame content to at least one of a plurality of user machines, comprising:
receiving a video signal of a program;
grabbing a frame of information from the video signal;
publishing the frame of information to at least one of a plurality of user machines;
selectively permitting at least one user to modify the frame of information to create a modified frame of information;
receiving modifications to the frame of information;
publishing the modified frame of information to at least one of a plurality of user machines.
